# EUROPÄISCHE PATENTSCHRIFT

(11) **EP 1 216 912 B1**
(45) Veröffentlichungstag und Bekanntmachung des Hinweises auf die Patenterteilung: **09.02.2005**
(21) Anmeldenummer: 01130019.1
(22) Anmeldetag: 18.12.2001
(51) Int. Cl.: B62D 5/04

(54) **Fehlertolerante elektromechanische Stelleinrichtung**
Fault tolerant electromechanical control device
Dispositif de commande électromécanique tolérant les défauts

(30) Priorität: 22.12.2000 DE 10064673
(43) Veröffentlichungstag der Anmeldung: 26.06.2002
(73) Patentinhaber: RENK AKTIENGESELLSCHAFT, 86159 Augsburg (DE)
(72) Erfinder: Walter, Alexander, Dr., 86161 Augsburg (DE)
(74) Vertreter: Schober, Stefan, Dipl.-Ing.

(56) Entgegenhaltungen:
- EP-A- 0 977 098
- WO-A-98/53374
- DE-A- 19 833 460
- US-A- 3 702 575
- US-A- 4 546 437
- US-A- 6 095 277

## Beschreibung

Die Erfindung betrifft eine fehlertolerante elektromechanische Stelleinrichtung gemäß dem Oberbegriff des Patentanspruchs 1.

Aus der DE 198 33 460 ist ein fehlertoleranter Lenksteller bekannt mit einem elektronischen Regel/Steuerwerk, das Lenksignale für einen elektrischen Stellmotor erzeugt. Der Lenksteller weist ein, in zwei Subsysteme unterteiltes, elektronisches Regel/Steuerwerk mit jeweils einem an der Ausgangsseite eines Stellmotors angeschlossenen Untersetzungsgetriebe auf deren Ausgangswinkel in einem gemeinsamen Überlagerungsgetriebe summiert werden. Die Abtriebswelle des Überlagerungsgetriebes wird an das Lenkgetriebe geführt und ist mit einem Winkelsensor versehen. Die Stellmotoren sind von der Momentenseite her so dimensioniert, dass sie die Lenkaufgabe jeweils vollständig allein lösen können, so dass eine fail-safe-Eigenschaft gegeben ist. Die Motoren jedes Subsystems werden jeweils durch eine Leistungsendstufe angesteuert, die ihrerseits ihr Freigabesignal von beiden Prozessrechnern bekommt. Dabei ist das Freigabesignal von dem jeweils nicht zum Subsystem gehörenden anderen Prozessrechner priorisiert, um im Falle eines Defekts des Prozessrechners dieses Subsystems die jeweilige Leistungsendstufe durch den intakten Prozessrechner ansteuern zu können. Um Fehler feststellen zu können, muß jeder Prozessrechner parallel zu seinen eigenen, zusätzlich die Regelungsdaten des anderen Subsystems berechnen.

Fällt ein Prozessrechner aus, dann ist der entsprechende Regelkreis außer Betrieb gesetzt. Darüber hinaus kann es Teil des Ausfallbildes sein, daß dieser defekte Prozessrechner über sein priorisiertes Freigabesignal zusätzlich den anderen Regelkreis abschaltet und damit jegliche Stellfunktion abschaltet.

Elektrische Störungen in einem Subsystem dieser Anordnung können über die Messleitungen auch auf das andere Subsystem übertragen werden.

Aufgabe der Erfindung ist es, diese Schwächen zu vermeiden und die Fehlertoleranz einer elektromechanischen Stelleinrichtung weiter zu erhöhen, so daß die Stelleinrichtung auch bei Auftritt eines Fehlers voll funktionsfähig bleibt.

Diese Aufgabe wird durch die Merkmale des kennzeichnenden Teils des Patentanspruchs 1 gelöst.

Durch die vorteilhafte erfindungsgemäße digitale Kommunikation zwischen den Steuerungen erhält auch eine zusätzliche Vergleicher-Steuerung die Sensorwerte dieser Steuerungen und kontrolliert anhand des ebenfalls zugeführten Eingangssignals die Funktionen der beiden Steuerungen. Auch die Regelungsdaten der Regelkreise können über die digitale Kommunikation zwischen allen Steuerungen ausgetauscht werden. Durch die vorzugsweise optische Ausführung der digitalen Kommunikation wird eine strikte Potentialtrennung erreicht.

Fällt ein Regelkreis jedoch aus, dann unterbricht die Vergleicher-Steuerung die Regelstrecke des fehlerhaften Kanals. Der Motor des fehlerhaften Zweiges kann dabei sowohl im Leerlauf als auch im haltenden Zustand sein. Durch das selbsthemmende Getriebe bleibt der fehlerhafte Zweig immer stehen. Der intakte Zweig kann über das Summierungsgetriebe die Regelaufgabe weiter erfüllen.

Die Möglichkeit, dass die Vergleicher-Steuerung ausfällt und beide Kreise stilllegt, wird durch die technische Ausführung der Freigabe verhindert. Die Freigabe bzw. die Ansteuerung der Freigabe ist so ausgeführt, dass wenn eine der beiden Freigaben geöffnet wird (also den Regelkreis unterbricht) in jedem Fall zwangsläufig die andere Freigabe schließt (also diesen Regelkreis freigibt). Damit ist auch bei einem defekten Vergleicher die Funktion der Stelleinrichtung gewährleistet. Die interne Ausführung des Vergleichers mit zwei Relais stellt sicher, dass der Regelkreis auch dann noch funktioniert, wenn ein Teil der Freigabeschaltung (ein Relais) ausfällt.

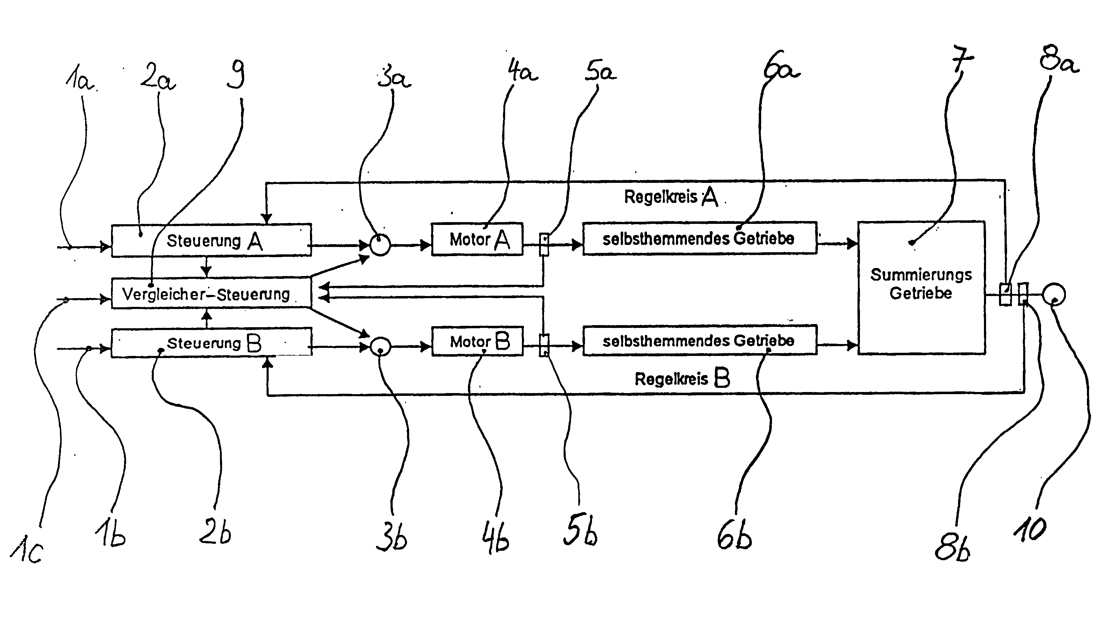

Die Figur zeigt blockschaltbildartig die wesentlichen Komponenten einer erfindungsgemäßen fehlertoleranten Stelleinrichtung und ihren funktionelle Verbindung.

An einem Aktuator wie beispielsweise einem Lenkrad, Fahr- oder Bremspedal wird durch drei voneinander unabhängige Sensoren der Stellwert aufgenommen und über drei Daten-Busse - beispielsweise CAN-Busse - getrennt voneinander als Eingangssignale 1a, b und c den Steuerungen 2a, b sowie der Vergleicher-Steuerung 9 zugeführt. Über digitale Kommunikationsverbindungen können die Steuerungen 2a, b ihre eigenen Eingangssignale 1a, b an die Vergleicher-Steuerung 9 weitergeben, welche bei Abweichung eines der Eingangssignale 1a oder 1b gegenüber den anderen beiden, den entsprechenden Regelkreis unterbrechen kann.

Eine bevorzugte Ausführung sieht vor, dass alle Steuerungen 2a, b und 9 ihre eigenen Eingangssignale 1a, b und c an die jeweils anderen beiden Steuerungen weitergeben, so dass jede Steuerung 2a, b und 9 bei Abweichungen zwischen den Eingangssignalen 1a, b und c - beispielsweise aufgrund eines defekten Sensors am Aktuator - anhand einer zwei aus drei Auswahl mit dem richtigen Eingangswert weiterarbeiten kann. Dies steigert in vorteilhafter Weise die Fehlertoleranz des gesamten Systems, da die Regelungsaufgabe sogar bei Ausfall eines Sensors noch von beiden Regelkreisen ausgeführt wird. Die Stelleinrichtung könnte in diesem Zustand einen weiteren Fehler in einem Regelkreis tolerieren und würde mit dem anderen Regelkreis zuverlässig weiterarbeiten.

Aus den Eingangssignalen 1a/b zusammen mit - in den Steuerungen 2a/b abgelegten - Vorgabewerten ermitteln die Steuerungen 2a/b einen Sollwert für den Ausgang 10. Die Vergleicher-Steuerung 9 ermittelt aus ihrem Eingangswert 1c und den - in ihr abgelegten - Vorgabewerten die Einstellwerte für die Motoren 4a/b der beiden Regelkreise A/B.

Die Steuerungen 2a/b steuern jeweils über eine Freigabe 3a/b einen Elektromotor 4a/b an und bilden zusammen mit den Motoren 4a/b, selbsthemmenden Getrieben 6a/b sowie einem Summierungsgetriebe 7 und Sensoren 8a und 8b jeweils einen Regelkreis A/B zum Einstellen des mechanischen Ausgangswertes 10. Durch die Sensoren 8a, b wird der Istwert des mechanischen Ausganges 10 aufgenommen und als Signal zurück an die Steuerungen 2a/b geführt, um nach einem Soll/Ist-Vergleich den jeweiligen Motor 4a/b entsprechend anzusteuern. Durch den Einsatz von zwei voneinander unabhängigen Sensoren 8a, b an der Ausgangswelle ist in vorteilhafter Weise neben der Redundanz auch eine strikte Potentialtrennung der beiden Regelkreise gegeben.

Im Normalbetrieb arbeiten beide Regelkreise A/B bei der Einstellung des Ausgangswerts 10 zusammen und beide Elektromotoren 4a/b treiben über ein selbsthemmendes Getriebe 6a/b - beispielsweise ein Schneckengetriebe - voneinander unabhängig in das Summierungsgetriebe 7 ein, welches diese beiden Eingangswerte miteinander überlagert und als ein Ausgangswert 10 zu seiner Abtriebswelle führt.

Der mechanische Ausgang 10 ist beispielsweise mit einem Lenkgetriebe, einer Bremse oder sonstigen Einrichtungen eines Fahrzeuges verbunden. Die Ausgangswelle des Summierungsgetriebes 7 kann beispielsweise auch die Nullwelle eines Kettenfahrzeug-Getriebes antreiben, um regeneratives Lenken zu steuern.

Als Summierungsgetriebe 7 wird vorzugsweise ein Planetengetriebe eingesetzt, wobei alternativ auch ein Hebelsystem möglich ist.

Beide Motoren 4a/b bzw. die gesamten Regelkreise A/B sind so ausgelegt, dass sie den Ausgangswert 10 jeweils alleine einstellen können.

Durch die Vergleicher-Steuerung 9 werden die Funktionen der einzelnen Regelkreise A/B ständig überprüft. Dazu sind an den Motorwellen bzw. Eingangswellen der Getriebe 6a/b Sensoren 5a bzw. b vorgesehen, welche die dort anliegenden Istwerte aufnehmen und der Vergleicher-Steuerung 9 zuführen. Diese Istwerte werden mit den - wie oben bereits beschrieben - ermittelten Sollwerten verglichen und falls die Vergleicher-Steuerung 9 Abweichungen feststellt, unterbricht sie den zugehörigen Regelkreis A/B indem sie dessen Freigabe 3a bzw. b öffnet. Die Sensoren 5a und b können auch jeweils am Ausgang des selbsthemmenden Getriebes 6a/b angeordnet werden.

Der Motor 4a/b des abgeschalteten fehlerhaften Zweiges kann dabei sowohl im Leerlauf als auch in haltendem Zustand sein, aufgrund des selbsthemmenden Getriebes 6a/b ist sichergestellt, daß dieser Eintrieb in das Summierungsgetriebe 7 blockiert ist. Der intakte Regelkreis A/B kann über das Summierungsgetriebe 7 die Regelaufgabe weiter erfüllen.

Bei einem Fehler oder Ausfall der Vergleicher-Steuerung 9 bestünde die Gefahr, daß beide Regelkreise A/B über die Freigaben 3a/b unterbrochen werden. Dies wird jedoch durch die technische Ausführung der Freigabe verhindert. Die Freigabe bzw. Ansteuerung der Freigabe ist so ausgeführt, dass bei Öffnung einer Freigabe 3a/b, d.h. Unterbrechung eines Regelkreises A/B zwangsläufig die andere Freigabe 3a/b schließt und somit der andere Regelkreis A/B die Stellfunktion ausführen kann. Damit ist sichergestellt, dass auch bei defekter Vergleicher-Steuerung 9 mindestens ein Regelkreis A/B den Ausgangswert 10 einregelt.

Um diesen Zweck zu erfüllen, wird die Freigabe vorzugsweise mit zwei Relais ausgeführt, welche durch die Vergleicher-Steuerung 9 getrennt voneinander geschaltet werden und jeweils in angezogenem Zustand einen der Regelkreise A/B freigeben. An beiden Relais gibt der - in abgefallenem Zustand geschaltete - Kontakt jeweils den anderen Regelkreis A/B frei.

Damit ist gewährleistet, daß bei Fehlfunktion der Vergleicher-Steuerung 9 und einem daraus resultierenden Abfallen beider Relais weiterhin beide Regelkreise A/B geschlossen bleiben und somit ihre Regelfunktion erfüllen. Selbst wenn ein Relais ausfällt und zwischen den Schaltkontakten hängen bleibt wird durch das andere Relais mindestens einer der Regelkreise A/B freigegeben.

Somit ist bei Ausfall einer elektronischen oder elektrischen Komponente die zuverlässige Funktion der Stelleinrichtung in vorteilhafter Weise gewährleistet.

Ein wesentlicher Kern der vorliegenden Erfindung ist die strikte elektrische Potential-Trennung zwischen den Steuerungen 2a, 2b sowie 9 bzw. zwischen den Regelkreisen A und B, wodurch verhindert wird, dass sich elektrische Störungen innerhalb eines Teilsystems auch auf andere übertragen können. Vorzugsweise sind sämtliche Kommunikations-Schnittstellen zwischen den Steuerungen 2a und 2b sowie der Vergleicher-Steuerung 9 mit Optokopplem ausgeführt.

Eine weitere Möglichkeit bietet die komplette Ausführung der Steuerungen 2a, 2b, 9 mit Lichtleitern oder anderen galvanisch trennenden Elementen, wie beispielsweise Signaltrafos.

Weiterhin ist ein übergeordnetes Diagnosesytem vorgesehen, an welches über die Daten-Busse, vorzugsweise CAN-Busse, sämtliche Fehler gemeldet werden. Damit werden die Funktionen sämtlicher elektrischer Bauteile, wie beispielsweise der Sensoren 5a/b, 8a/b, der Motoren 4a/b, der Steuerungen 2a/b, 9 sowie auch der Sensoren an den Aktoren zur Erzeugung der Eingangssignale überwacht. Auch ausbleibende Lebenssignale der digitalen Kommunikationselektronik (auch auf den Daten-Bussen) werden als Fehler erkannt. Je nach dem wie bedeutend der oder die registrierten Fehler durch das Diagnosesystem entsprechend seiner Vorgaben eingestuft wird bzw. werden, kann es das Fahrzeug stillsetzen oder lediglich eine Fehlermeldung anzeigen.

Beide Regelkreise A, B werden getrennt voneinander mit Strom versorgt, wobei vorzugsweise für jeden Regelkreis A, B eine eigene Batterie vorgesehen wird. Bei zentraler Stromversorgung mit einer Batterie müssen für beide Regelkreise A, B getrennt voneinander Pufferungen vorgesehen, welche bei Ausfall der Batterie den Weiterbetrieb der Stelleinrichtung zumindest bis zum Stillstand des Fahrzeuges ermöglichen und gleichzeitig eine strikte Potentialtrennung der Regelkreise A, B gewährleisten.

### Bezugszeichenliste

- 1 a, b, c: Eingangssignal
- 2a, b: Steuerung A, B
- 3a, b: Freigabe
- 4a, b: Motor A, B
- 5a, b: Sensor
- 6a, b: Getriebe
- 7: Summierungsgetriebe
- 8a, b: Sensor
- 9: Vergleicher-Steuerung
- 10: Ausgang

## Patentansprüche

1. Elektromechanische Stelleinrichtung zur Umsetzung eines elektrischen Stellsignales in einen mechanischen Ausgangsstellwert für die Anwendung in Fahrzeugen, mit zwei voneinander unabhängigen Regelkreisen A/B, jeweils bestehend aus mindestens einer Steuerung (2a; 2b) und mindestens einem von dieser Steuerung (2a, 2b) angesteuerten elektrischen Motor (4a; 4b), der jeweils über ein selbsthemmendes Getriebe (6a; 6b) in ein Summierungsgetriebe (7) eintreibt, welches die Stellwerte der Stellmotoren (4a, 4b) zum Ausgangsstellwert (10) überlagert, **dadurch gekennzeichnet, dass** eine zusätzliche Vergleicher-Steuerung (9) vorgesehen ist, welche die Funktionen der Regelkreise A und B kontrolliert und Schnittstellen zwischen den Steuerungen (2a, 2b, 9) sowie zwischen den Teilsystemen vorgesehen sind, deren elektrische Potentiale strikt voneinander getrennt sind.

2. Elektromechanische Stelleinrichtung nach Anspruch 1, **dadurch gekennzeichnet, dass** die Schnittstellen zwischen den Steuerungen (2a, 2b, 9) sowie zwischen den Teilsystemen opto-elektronisch ausgeführt sind.

3. Elektromechanische Stelleinrichtung nach Anspruch 1, **dadurch gekennzeichnet, dass** die Steuerungen (2a, 2b, 9) sowie die elektronischen Teile der Regelkreise A und B mit Lichtleitern ausgeführt sind.

4. Elektromechanische Stelleinrichtung nach einem oder mehreren vorangegangenen Ansprüchen, **dadurch gekennzeichnet, dass** jeder Steuerung (2a, 2b, 9) ein Eingangssignal (1a, b, c) zuführbar ist, welches jeweils von voneinander unabhängigen Sensoren erzeugt wird.

5. Elektromechanische Stelleinrichtung nach einem oder mehreren vorangegangenen Ansprüchen, **dadurch gekennzeichnet, dass** sämtliche Daten mittels digitaler Kommunikation zwischen allen Steuerungen (2a, 2b, 9) austauschbar sind.

6. Elektromechanische Stelleinrichtung nach einem oder mehreren vorangegangenen Ansprüchen, **dadurch gekennzeichnet, dass** ein übergeordnetes Diagnosesystem vorgesehen ist, durch welches alle eletrischen und elektronischen Funktionen überwachbar sind.

7. Elektromechanische Stelleinrichtung nach einem oder mehreren vorangegangenen Ansprüchen, **dadurch gekennzeichnet, dass** jeder Regelkreis A oder B so ausgelegt ist, dass der Ausgangswert (10) jeweils durch einen Regelkreis A oder B alleine einstellbar ist.

8. Elektromechanische Stelleinrichtung nach einem oder mehreren vorangegangenen Ansprüchen, **dadurch gekennzeichnet, dass** Sensoren (5a, b) vorgesehen sind, welche die Stellwerte der einzelnen Regelkreise A und B aufnehmen und der Vergleicher-Steuerung (9) zuführen und weitere Sensoren (8a, b) vorgesehen sind, welche den Istwert des Ausgangswertes (10) aufnehmen und den Steuerungen (2a, 2b) der Regelkreise A und B zuführen.

9. Elektromechanische Stelleinrichtung nach einem oder mehreren vorangegangenen Ansprüchen, **dadurch gekennzeichnet, dass** durch die Vergleicher-Steuerung (9) ein fehlerhafter Regelkreis A oder B abschaltbar ist.

10. Elektromechanische Stelleinrichtung nach Anspruch 7, **dadurch gekennzeichnet, dass** bei Abschaltung eines Regelkreises A oder B zwangsläufig der andere Regelkreis A oder B eingeschaltet wird, wobei für jeden Regelkreis A und B ein eigenes Relais vorgesehen ist, das in angezogenem Zustand diesen Regelkreis freigibt und in abgefallenem Zustand den jeweils anderen Regelkreis freigibt.

## Claims

1. Electromechanical control device for converting an electrical actuating signal into a mechanical manipulated output value for use in vehicles, having two independent control loops A/B, each consisting of at least one control (2a; 2b) and at least one electric motor (4a; 4b), which is activated by this control (2a, 2b) and inputs, by way of a respective self-locking gear unit (6a; 6b), into a summation gear unit (7) that superimposes the manipulated values of the servomotors (4a, 4b) to form the manipulated output value (10), **characterised in that** an additional comparator-control (9) is provided that checks the functions of the control loops A and B, and interfaces are provided between the controls (2a, 2b, 9) and also between the subsystems, whose electric potentials are strictly separate from each other.

2. Electromechanical control device according to claim 1, **characterised in that** the interfaces between the controls (2a, 2b, 9) and also between the subsystems are constructed opto-electronically.

3. Electromechanical control device according to claim 1, **characterised in that** the controls (2a, 2b, 9) and also the electronic portions of the control loops A and B are constructed with light guides.

4. Electromechanical control device according to one or more of the preceding claims, **characterised in that** an input signal (1a, b, c), generated by respective sensors that are independent of each other, can be fed to each control (2a, 2b, 9).

5. Electromechanical control device according to one or more of the preceding claims, **characterised in that** all the data can be exchanged by means of digital communication between all the controls (2a, 2b, 9).

6. Electromechanical control device according to one or more of the preceding claims, **characterised in that** a higher-level diagnostic system is provided, by means of which all the electrical and electronic functions can be monitored.

7. Electromechanical control device according to one or more of the preceding claims, **characterised in that** each control loop A or B is designed in such a way that the output value (10) can in each case be adjusted by means of one control loop A or B alone.

8. Electromechanical control device according to one or more of the preceding claims, **characterised in that** sensors (5a, b) are provided that pick up the manipulated values of the individual control loops A and B and feed them to the comparator-control (9), and further sensors (8a, b) are provided that pick up the actual value of the output value (10) and feed it to the controls (2a, 2b) of the control loops A and B.

9. Electromechanical control device according to one or more of the preceding claims, **characterised in that** a faulty control loop A or B can be switched off by the comparator-control (9).

10. Electromechanical control device according to claim 7, **characterised in that** when one control loop A or B is switched off, the other control loop A or B is automatically switched on, with there being provided for each control loop A and B a separate relay, which in the pulled-up state enables this control loop and in the dropped-out state enables the other control loop, in each case.

## Revendications

1. Dispositif de réglage électromécanique permettant de transformer un signal de réglage électrique en une valeur de réglage de sortie mécanique, destiné à des véhicules, comportant deux circuits de régulation A/B indépendants l'un de l'autre, respectivement constitués d'au moins une commande (2a ; 2b) et d'au moins un moteur électrique (4a ; 4b) commandé par cette commande (2a, 2b), chaque moteur entraînant un mécanisme autobloquant (6a ; 6b) vers un mécanisme de sommation (7) qui superpose les valeurs de réglage des moteurs de réglage (4a, 4b) pour donner la valeur de réglage de sortie,
**caractérisé en ce qu'**
une commande de comparateur supplémentaire (9) contrôle les fonctions des circuits de régulation A et B, et des interfaces sont prévues entres les commandes (2a, 2b, 9) ainsi qu'entre les parties de système, dont les potentiels électriques sont strictement séparés les uns des autres.

2. Dispositif de réglage électromécanique selon la revendication 1,
**caractérisé en ce que**
les interfaces entre les commandes (2a, 2b, 9) ainsi qu'entre les parties de système sont optoélectroniques.

3. Dispositif de réglage électromécanique selon la revendication 1,
**caractérisé en ce que**
les commandes (2a, 2b, 9) ainsi que les parties électroniques des circuits de régulation A et B comportent des conducteurs de lumière.

4. Dispositif de réglage électromécanique selon l'une ou plusieurs des revendications précédentes,
**caractérisé en ce que**
chaque commande (2a, 2b, 9) peut recevoir un signal d'entrée (1a, b, c) généré chaque fois par des capteurs indépendants les uns des autres.

5. Dispositif de réglage électromécanique selon l'une ou plusieurs des revendications précédentes,
**caractérisé en ce que**
toutes les données peuvent être échangées entre toutes les commandes (2a, 2b, 9) au moyen d'une communication numérique.

6. Dispositif de réglage électromécanique selon l'une ou plusieurs des revendications précédentes,
**caractérisé en ce qu'**
un système de diagnostic superviseur permet de contrôler toutes les fonctions électriques et électroniques.

7. Dispositif de réglage électromécanique selon l'une ou plusieurs des revendications précédentes,
**caractérisé en ce que**
chacun des circuits de régulation A ou B est conçu pour régler chaque fois la valeur de sortie (10) par un seul des circuits de régulation A ou B.

8. Dispositif de réglage électromécanique selon l'une ou plusieurs des revendications précédentes,
**caractérisé en ce que**
des capteurs (5a, b) reçoivent les valeurs de réglage des circuits de régulation individuels A et B et les transmettent à la commande de comparateur (9), et d'autres capteurs (8a, b) reçoivent la valeur réelle de la valeur de sortie (10) et la transmettent aux commandes (2a, 2b) des circuits de commande A et B.

9. Dispositif de réglage électromécanique selon l'une ou plusieurs des revendications précédentes,
**caractérisé en ce que**
la commande de comparateur (9) permet de désactiver un circuit de régulation A ou B défaillant.

10. Dispositif de réglage électromécanique selon la revendication 7,
**caractérisé en ce que**
lors de la désactivation d'un circuit de régulation A ou B, l'autre circuit de régulation A ou B est obligatoirement activé avec un relais propre prévu pour chaque circuit de régulation A et B afin de débloquer ce circuit de régulation lorsqu'il est actionné vers le haut et de débloquer l'autre circuit de régulation respectif lorsqu'il est actionné vers le bas.
